# EUROPÄISCHE PATENTSCHRIFT

(11) **EP 1 792 747 B1**
(45) Veröffentlichungstag und Bekanntmachung des Hinweises auf die Patenterteilung: **22.04.2009**
(21) Anmeldenummer: 06090214.5
(22) Anmeldetag: 29.11.2006
(51) Int. Cl.: B60B 3/00, B60B 5/02, B60B 21/00

(54) **Leichtbaufelge für ein Kraftfahrzeug mit einer Wabenstruktur mit mäanderförmigem Verlauf**
Lightweight wheel for a vehicle having a honeycomb structure and a zig-zag form
Roue de construction legere pour véhicule ayant des structures alvéolées avec une forme en méandres

(30) Priorität: 05.12.2005 DE 202005019376 U
(43) Veröffentlichungstag der Anmeldung: 06.06.2007
(73) Patentinhaber: Stiftung Alfred-Wegener-Insitut für Polar- und Meeresforschung, 27570 Bremerhaven (DE)
(72) Erfinder: Hamm-Dubischar, Christian, Dr., 27580 Bremerhaven (DE)

(56) Entgegenhaltungen:
- DE-U1- 8 336 075
- DE-U1-6202004 015 81
- GB-A- 2 392 141
- JP-A- 5 139 104
- US-A- 284 990
- US-A- 3 884 527

## Beschreibung

Die Erfindung betrifft eine Leichtbaufelge für ein Kraftfahrzeug mit einem tragenden Felgenkörper in der Radialebene der Leichtbaufelge aus netzartig miteinander verbundenen Rippen mit einem hohen Aspektverhältnis von Breite zu Höhe, der eine zentrale Nabe zur Befestigung an einer Kraftfahrzeugachse aufweist, und mit einem mit dem Felgenkörper verbundenen äußeren Felgenbett.

Leichtbaufelgen für Kraftfahrzeuge lösen in steigendem Maße konventionelle Stahlfelgen ab, nicht zuletzt wegen ihres individuellen Erscheinungsbildes. Dieses wird aber wesentlich durch die Konstruktion der Felge bestimmt: Zur Erzielung der notwendigen Festigkeit wird der Felgenkörper verhältnismäßig dickwandig und schwer ausgeführt, wodurch sich das hohe Gewicht besonders bei Sportwagen unangenehm bemerkbar macht. Eine Gewichtsreduzierung ist insbesondere deshalb gewünscht, weil Felgen als ungefederte Massen möglichst leicht sein müssen, um besonderen Bodenkontakt zu halten und auch auf unebener Fahrbahn effektiv zu haften. Eine besondere Herausforderung ist auch das Material der Leichtbaufelge, dessen Eigenschaften Einfluss auf die Auswahl geeigneter Geometrien hat. Dabei sind Verbesserungen vor allem im Bereich des Felgenkörpers, insbesondere durch eine bessere Vernetzung der tragenden Rippen, zu erzielen. Als zusätzliche Forderung ist hier jedoch eine gute Luftdurchlässigkeit des Felgenkörpers zu nennen, um eine effektive Kühlung von Scheibenbremsen, die hinter der Felge liegen, zu ermöglichen.

### Stand der Technik

Aus dem Stand der Technik sind Leichtbaufelgen in der Ausführung als Leichtmetallfelgen in unterschiedlichsten Konstruktions- und Designformen bekannt. Dabei sind Leichtmetallfelgen mit einem tragenden Felgenkörper, bei dem die netzartig miteinander verbundenen Rippen die tragende Funktion übernehmen, von solchen Felgenkörper zu unterscheiden, bei dem die netzartig miteinander verbundenen Rippen als nichttragender Vorsatz vor dem eigentlichen Speichenkörper angeordnet oder nur als Relief auf einer Scheibe ausgebildet sind. Im zweiten Fall haben die netzartig miteinander verbundenen Rippen nur eine Schmuckfunktion, im ersten Fall hingegen sind sie voll funktionsfähig. Auf diesen Fall, der die weitaus höheren Anforderungen an den Aufbau stellt, da Funktionalität und Ästhetik miteinander verbunden werden müssen, bezieht sich auch die erfindungsgemäße Leichtbaufelge.

Für den ersten Fall sei aus dem Stand der Technik beispielsweise die aus der DE 196 12 115 1 bekannte Felge genannt. Zu erkennen ist hier ein Speichenaufbau mit fünf Speichen. Dabei sind die Speichen relativ breit ausgeprägt und weisen zur Gewichtsverringerung verschiedene Durchbrüche auf.

Eine Felge mit einem Felgenkörper mit radialen Speichen und konzentrischen Rippen ist aus der DE 20 2004 015 816 U1 bekannt. Diese Felge ist bereits darauf ausgelegt, ein möglichst geringes Gewicht mit einer hohen Festigkeit und einem ansprechenden Gesamteindruck zu kombinieren. Dabei weist sie einen hohen Grad an Symmetrie auf, wobei das streng orthogonale Erscheinungsbild überwiegt. Durch diese Orthogonalität erfolgt eine entsprechende Kraftaufteilung in radial und umlaufend wirkende Kräfte, die die häufigsten Lastfälle im realen Einsatz der Leichtbaufelge darstellen. Obwohl auch eine schräge Krafteinleitung, wie sie beispielsweise beim Befahren eines Bordsteines in der Leichtbaufelge auftreten kann, aufgenommen werden kann, handelt es sich hierbei um einen Lastfall, der noch besser durch eine laterale Versteifung des Felgenkörpers kompensiert werden könnte. Des Weiteren liegt der Felgenkörper der bekannten Leichtbaufelge genau in einer Radialebene der Leichtbaufelge und unterstützt hier das Felgenbett. Insbesondere bei sehr breiten Felgenbetten für sehr breite Reifen könnte es hier bei einer einseitigen Belastung des Reifens zu einer ebenso einseitigen Belastung der Leichtbaufelge kommen.

Die gattungsgemäße Leichtbaufelge ist aus der DE 83 36 075.U bekannt. Diese Leichtbaufelge zeigt einen tragenden Felgenkörper in der Radialebene der Leichtbaufelge aus netzartig miteinander verbundenen Rippen mit einem hohen Aspektverhältnis von Breite zu Höhe. Eine Optimierung hinsichtlich Materialeinsatz, optischem Erscheinungsbild und spezieller Belastbarkeit hat bei dieser Leichtbaufelge jedoch nicht stattgefunden. Somit wirkt sie eher konventionell und kann speziellen Belastungsfällen auch nicht in besonderer Weise standhalten.

### Aufgabenstellung

Die **Aufgabe** für die vorliegende Erfindung ist daher darin zu sehen, eine Leichtbaufelge der gattungsgemäßen Art anzugeben, die ein geringes Gewicht mit einer hohen Festigkeit, mit einem besonders ansprechenden optischen Gesamteindruck und darüber hinaus noch mit einer optimalen Belastbarkeit auch von seltener auftretenden Belastungsfällen für eine Krfatfahrzeugfelge kombiniert. Es soll somit eine ästhetisch ansprechende, hochfunktionelle Leichtbaufelge zur Verfügung gestellt werden, die auch einer robusten Handhabung mit einem hohen Sicherheitsstandard standhält. Darüberhinaus soll eine hohe Luftdurchlässigkeit zur Kühlung von hinter der Leichtbaufelge liegenden Elementen gewährleistet sein.

Als **Lösung** für diese Aufgabe ist die erfindungsgemäße Leichtbaufelge gekennzeichnet durch einen Aufbau der kraftübertragenden, netzartig miteinander verbundenen Rippen des Felgenkörpers in Form einer Wabenstruktur aus mehreren konzentrischen Wabenringen mit einer Vielzahl von einzelnen bodenlosen Waben, die zwischen den Wabenringen versetzt zueinander angeordnet sind und in Richtung auf die Nabe hin kleiner werden und gekennzeichnet durch einen mäanderförmigen Verlauf der Wabenstruktur entlang der Radialebene.

Die Leichtbaufelge nach der Erfindung zeichnet sich durch einen hochsymmetrischen und besonders filigranen Aufbau aus, der einen geringen Materialeinsatz ermöglicht und trotzdem durch den hohen Vernetzungsgrad eine hohe Festigkeit garantiert. Diese Festigkeit wird zum einen durch die Integration einer Wabenstruktur erreicht, wie sie aus der Natur bekannt ist und bereits in vielen Leichtbaukonstruktionen Verwendung findet, da hier eine optimaler Kompromiss zwischen Leichtigkeit und Festigkeit gefunden wurde. Die Vorzugsrichtung von radialen Speichen wurde aufgehoben und durch einen Verbund aus sechseckigen Waben ersetzt, der sehr gut auch für die schräge Krafteinleitung geeignet ist. Die einzelnen Waben sind - der runden Form der Leichtbaufelge angepasst - in konzentrischen Wabenringen angeordnet. Dabei sind die Waben benachbarter Wabenringe immer um eine halbe Wabenbreite versetzt angeordnet, sodass die typische Wabenstruktur entsteht. Zur Nabe hin werden die Waben kontinuierlich kleiner, was einen sehr harmonischen und hochsymmetrischen Gesamteindruck ergibt.

Durch die Wahl der Wabengeometrie, beispielsweise kann der dem Felgenbett benachbarte, äußere Wabenring aus Wabenabschnitten, beispielsweise halben Waben, aufgebaut sein, und auch der Wabengröße - die Waben auf dem äußeren konzentrischen Wabenring direkt am Felgenbett können größer oder kleiner beginnen, kann das harmonische Maschenbild der erfindungsgemäßen Leichtbaufelge individuell festgelegt werden, ohne die Funktionalität der Wabenstruktur zu verändern. Dabei können die einzelnen Waben beispielsweise im engmaschigeren Innenbereich, aber auch im Randbereich nahe dem Felgenbett abgerundet sein, sodass sich eine leichtere Herstellbarkeit ergibt. An ihren Berührungsflächen weisen sie aber die für Waben typische und optimale Sechseckform auf. Derartige Modifikationen dienen außerdem der weiteren Steigerung der Felgenfestigkeit und können beispielsweise durch Belastungssimulationsprogramme (LBF Wheelstrength) ermittelt werden. Außerdem verbessern sie den optischen Gesamteindruck und die Handhabbarkeit der erfindungsgemäßen Leichtbaufelge. Durch die Abrundung der Zwischenräume ist außerdem eine bessere Säuberung gewährleistet.

Bei der erfindungsgemäßen Leichtbaufelge ist durch den filigranen Wabenaufbau mit den bodenlosen Waben eine optimale Belüftung der hinter der Leichtbaufelge liegenden Bremsen, insbesondere Scheibenbremsen, gewährleistet. Die Wandungen der einzelnen Waben haben ein hohes Aspektverhältnis in der Breite zu ihrer Tiefe. Die Form der Waben ist damit schmal, aber tief, wodurch sich eine hohe Festigkeit ergibt. Diese Festigkeit wird noch durch die vollständige und hochsymmetrische Vernetzung aller Waben miteinander gesteigert, die sich gegenseitig abstützen und jede Krafteinleitung sicher abführen können.

Bei der zweiten konstruktiven Maßnahme zur Verbesserung der Festigkeit der erfindungsgemäßen Leichtbaufelge, insbesondere auch für breitere Leichtbaufelgen, auf die über die Felgenbreite unterschiedliche Kräften einwirken können, handelt es sich um den mäanderförmigen Verlauf der Wabenstruktur entlang der Radialebene der Leichtbaufelge. Durch diese Maßnahme wird die Leichtbaufelge ohne eine Verstärkung des eingesetzten Materials gleichmäßig im Bereich ihres Felgenbettes unterstützt. Es wird somit die Festigkeit verbessert ohne die charakteristischen Leichtbaueigenschaften der Felge zu beeinträchtigen. Zusätzlich wird durch den mäanderförmigen Verlauf noch der optische Gesamteindruck der Leichtbaufelge harmonisiert und damit noch gesteigert. Grundsätzlich umfasst der mäanderförmige Verlauf der Wabenstruktur jede regelmäßige oder auch unregelmäßige Lageveränderung über die Breite des Felgenbettes bzw. über die Tiefe der Felge. Ein besonders harmonischer Gesamteindruck ergibt sich bei einem gleichmäßigen, beispielsweise sinusförmigen Wellenverlauf der Wabenstruktur. Einen eher technisch geprägten Gesamteindruck wird eine Wabenstruktur vermitteln, die stufenförmig, also mit definierten Abkantungen verläuft. Dabei können mehrere kleine Stufen in einer Richtung und anschließend wieder mehrere kleine Stufen in der anderen Richtung vorgesehen sein. Es kann sich aber auch immer eine Stufe in der einen Richtung mit einer Stufe in der anderen Richtung abwechseln, sodass sich eine kontinuierliche Hoch-Tief-Struktur mit plateauförmigen Maxima und Minima ergibt. Insbesondere diese am vorderen oder hinteren Rand der Leichtbaufelge liegenden Plateaus tragen zur Verbesserung der lateralen Steifigkeit der Leichtbaufelge bei.

Durch die Möglichkeit, die Wabengröße, die Anzahl der konzentrischen Wabenringe oder Maxima- und Minima-Plateaus und den Mäanderverlauf zu variieren, können große Unterschiede im optischen Erscheinungsbild der erfindungsgemäßen Leichtbaufelge erzeugt werden. Der funktionelle Zusammenhang zwischen den einzelnen Strukturelementen ist jedoch bei jeder Ausführungsform identisch und gewährleistet größte Festigkeit unter den verschiedensten Belastungen. Damit stellt die Leichtbaufelge nach der Erfindung eine optimale Kombination aus einer optisch sehr ästhetischen Felge mit einer gleichzeitig sehr leistungsfähigen und unempfindlichen Leichtbaufelge dar. Der hohe Grad an Vernetzung durch die Wabenbildung nimmt auftretende, nicht radiär angelegte Spannungen auf, zusätzlich erzeugen die alternierend vorne und hinten angelegten Mäanderbereiche ein hohes Flächenträgheitsmoment und damit die für spezielle Lastfälle wie Kurvenfahrt notwendige Steifigkeit. Die offene Ausführung der Waben garantiert einen guten Luft- und Wärmeaustausch. Eine optimale Anpassung an den aktuellen Kundenwunsch, eine speziellen Autotyp oder aber auch an gängige Herstellungsverfahren ist problemlos möglich.

Das sich aus der Überlagerung von Wabenstruktur und Welligkeit ergebende Erscheinungsbild der erfindungsgemäßen Leichtbaufelge ähnelt dem der Kieselalgenart *Actinoptychus.* Kieselalgen haben bekanntermaßen eine ungeheure Vielfalt im Aufbau ihres Silikatskeletts entwickelt. Dabei ist die Ähnlichkeit keine Zufälligkeit, sondern beruht auf der Tatsache, dass die vorliegende Erfindung als vom Anmelder durchgeführte Anwendung des Verfahrens zur Ermittlung von konstruktiven Erstmodelldaten für eine technische Leichtbaustruktur entstanden ist (DE 103 56 682 A2). Mit diesem Verfahren können verschiedenste Geometrien aus der Natur auf Gebrauchsgegenstände aller Art und Größe des täglichen Lebens übertragen und angepasst werden.

Die Leichtbaufelge nach der Erfindung kann, wie bekannte Leichtbaufelgen, aus einem Leichtmetall, beispielsweise Aluminium, hergestellt sein. Der besonders ergonomische Aufbau der Leichtbaufelge ermöglicht aber auch den Einsatz von faserverstärkten Kunststoffen, wodurch völlig neue Wege im Felgenbau für die Automobilindustrie beschritten werden können. Insbesondere bietet sich der Einsatz von einem faserverstärkten Kunststoff mit anisotropen Materialeigenschaften an. Durch die nach dem unter besonderen Stabilitätskriterien ausgesuchten Vorbild der Natur konzipierte Konstruktionsform ist eine optimale Spannungsverteilung bei maximaler Festigkeit gewährleistet. Wie in der Natur können die Faserverstärkungen entlang der auftretenden Spannungsverläufe eingebracht werden. Dieses Vorgehen kann durch Anwendung numerischer Simulationsprozesse unter Spannungsbedingungen und durch optische Spannungsaufnahmen am Modell noch optimiert werden. Die Materialeigenschaften des Kunststoffs können also nach dem Verlauf der Spannungsbelastungen anisotrop ausgelegt werden. In Längsrichtung der Wabenwände beispielsweise wird eine besonders hohe Festigkeit gefordert. Entsprechend können die Faserverstärkungen eingebracht werden. Durch die Verwendung von Kunststoff ergeben sich besonders einfache und kostengünstige Herstellungsverfahren, die eine besondere Formenvielfalt bis in das Detail ermöglichen. Eine weitere bedeutsame Gewichtsreduzierung ist möglich, ohne dabei auf Festigkeit verzichten zu müssen. Durch geeignete Oberflächenbehandlungsverfahren, beispielsweise durch Beschichten mit einem selbstreinigenden Lotuseffektlack, kann eine schmutzabweisende Oberfläche und damit eine leichte Reinigung der relativ komplexen Wabenstruktur ermöglicht werden. Durch andere Verfahren, beispielsweise elektrochemisches Verchromen, kann bei Verwendung eines Kunststoffs trotzdem der Eindruck einer Leichtmetallfelge erhalten bleiben.

### Ausführungsbeispiele

**Ausbildungsformen** der erfindungsgemäßen Leichtbaufelge werden nachfolgend anhand der schematischen, in Relation zueinander nicht maßstäblichen Figuren näher erläutert. Dabei zeigt:
- **Figur 1**: eine frontale Vorderansicht einer ersten Ausführungsform,
- **Figur 2**: einen Querschnitt durch die Ausführungsform gemäß Fig. 1,
- **Figur 3**: eine perspektivische Ansicht der Ausführungsform gem. Fig. 1,
- **Figur 4**: eine frontale Vorderansicht einer ersten Ausführungsform,
- **Figur 5**: einen Querschnitt durch die Ausführungsform gemäß Fig. 2,
- **Figur 6**: eine perspektivische Ansicht der Ausführungsform gem. Fig. 2,
- **Figur 7**: eine frontale Vorderansicht einer ersten Ausführungsform,
- **Figur 8**: einen Querschnitt durch die Ausführungsform gemäß Fig. 3,
- **Figur 9**: eine perspektivische Ansicht der Ausführungsform gem. Fig. 3,
- **Figur 10**: eine frontale Vorderansicht einer ersten Ausführungsform,
- **Figur 11**: einen Querschnitt durch die Ausführungsform gemäß Fig. 4,
- **Figur 12**: eine perspektivische Ansicht der Ausführungsform gem. Fig. 4,
- **Figur 13**: eine frontale Vorderansicht einer ersten Ausführungsform,
- **Figur 14**: einen Querschnitt durch die Ausführungsform gemäß Fig. 5 und
- **Figur 15**: eine perspektivische Ansicht der Ausführungsform gem. Fig. 5,

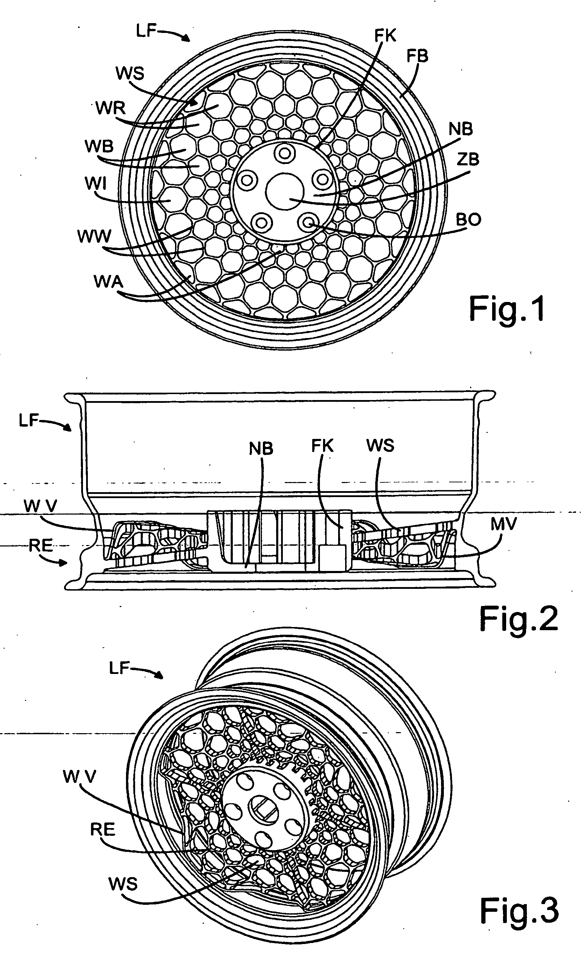

Die **Figur 1** zeigt eine Leichtbaufelge **LF** für ein Kraftfahrzeug mit einem kraftübertragenden inneren Felgenkörper **FK** und einem damit verbundenen äußeren Felgenbett **FB.** Dabei kann die Leichtbaufelge **LF** bevorzugt aus einem faserverstärkten Kunststoff mit anisotropen Materialeigenschaften bestehen. Auf das Felgenbett **FB** wird im Betrieb ein Reifen aufgezogen, der Felgenkörper **FK** weist eine zentrale Nabe **NB** mit einer zentralen Bohrung **ZB** auf, mit der die Leichtbaufelge **LF** einseitig auf eine Fahrzeugachse aufgeschoben und mit mehreren Radbolzen durch dafür vorgesehen Bohrungen **BO** befestigt werden kann. Der Felgenkörper **FK** weist kraftübertragende, netzartig miteinander verbundene Rippen mit einem hohen Aspektverhältnis von Breite zu Höhe auf.

Der Aufbau der kraftübertragenden, netzartig miteinander verbundenen Rippen des Felgenkörpers **FK** erfolgt bei der erfindungsgemäßen Leichtbaufelge **LF** in Form einer Wabenstruktur **WS** aus mehreren konzentrischen Wabenringen **WR** mit einer Vielzahl von einzelnen, bodenlosen Waben **WB,** die zwischen den Wabenringen **KR** versetzt zueinander angeordnet sind und in Richtung auf die Nabe **NB** hin kleiner werden. Die Waben **WB** sind im Ausführungsbeispiel in ihrem Innern **WI** leicht abgerundet dargestellt, die Wabenwände **WW** zeigen aber den für die Wabenstruktur **WS** typischen sechseckigen Verlauf mit einem Versatz der Waben **WB** in benachbarten Wabenringen **WR** zueinander. Im dargestellten Ausführungsbeispiel besteht der dem Felgenbett **FB** benachbarte, äußere Wabenring **WR** aus Wabenabschnitten **WA,** die ungefähr 1/3 der Wabenhöhe aufweisen. Eine Anpassung der Geometrie der Waben im äußeren konzentrischen Wabenring **WR** an den jeweiligen Felgendurchmesser ist problemlos möglich. Die Waben **WB** im äußeren konzentrischen Wabenring **WB** am Felgenbett **FB** beginnen mit einem relativ großen Durchmesser. Es ergeben sich fünf konzentrische Wabenringe **WR,** von denen der äußerste und der innerste Wabenring **WR** Wabenabschnitte **WA** aufweisen.

In der **Figur 2** ist ein Querschnitt durch die Leichtbaufelge **LF** gemäß Figur 1 dargestellt. Dargestellt sind die zentrale Nabe **NB,** der Felgenkörper **FK** mit der Wabenstruktur **WS** und das Felgenbett **FB.** Zu erkennen ist in dieser Figur 2 deutlich der mäanderförmige Verlauf **MV** der Wabenstruktur **WS** in der Radialebene **RE** der Leichtbaufelge **LF.** Gezeigt ist ein stufenförmiger Verlauf **SV** mit fünf oberen Plateaus **OP** an der Vorderseite des Felgenbetts **FB** und fünf unteren Plateaus **UP** an der Hinterseite des Felgenbetts **FB.** Weiterhin ist zu erkennen, dass die Waben **WB** keinen Boden aufweisen, sodass eine optimale Durchlüftung der Leichtbaufelge **LF** gewährleistet ist.

Der stufenförmige Verlauf **SV** der Wabenstruktur **WS** in der Radialebene **RE** der Leichtbaufelge **LF** ist auch gut in der perspektivischen Ansicht gemäß **Figur 3** zu erkennen. Hier nicht erwähnte Bezugszeichen sind den anderen Darstellungen zu entnehmen.

Die folgenden Figuren sind jeweils in einer gleichen Dreiergruppe wie die Figuren 1, 2 und 3 zusammengestellt. Jeweils nicht erwähnte Bezugszeichen sind den Figuren 1, 2 und 3 zu entnehmen.

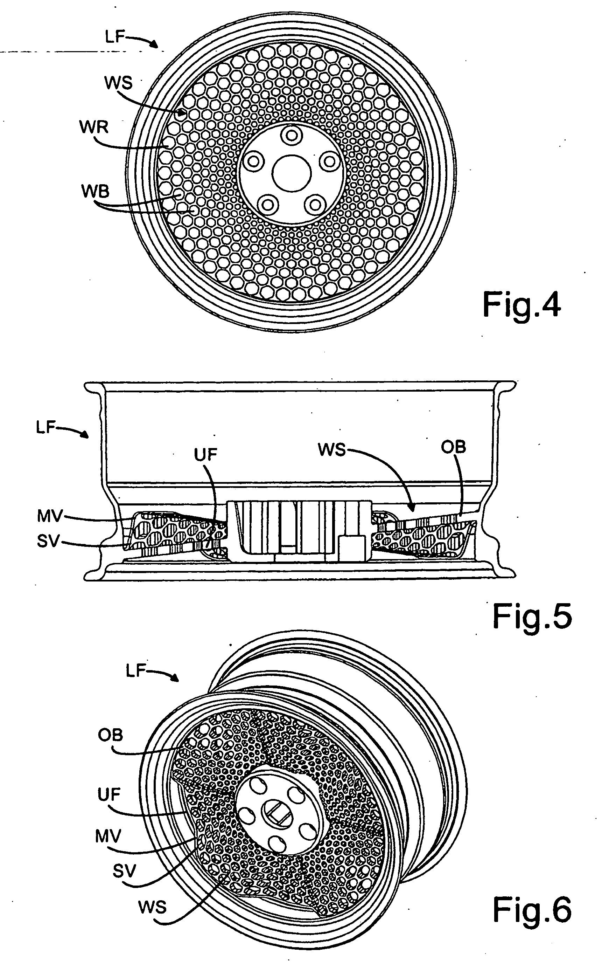

In **Figur 4** beginnt die Wabenstruktur **WS** im äußeren konzentrischen Wabenring **WR** mit bereits relativ kleinen, aber vollständigen Waben **WB.** Somit ergeben sich neun konzentrische Wabenringe **WR.** In den **Figuren 5 und 6** ist zu erkennen, dass der mäanderförmige Verlauf **MV** der Wabenstruktur **WS** wiederum einen stufenförmigen Verlauf **SV** aufweist. Der stufenförmige Verlauf **SV** weist im gewählten Ausführungsbeispiel weist wieder fünf obere Plateaus **OB** und fünf untere Plateaus UF auf.

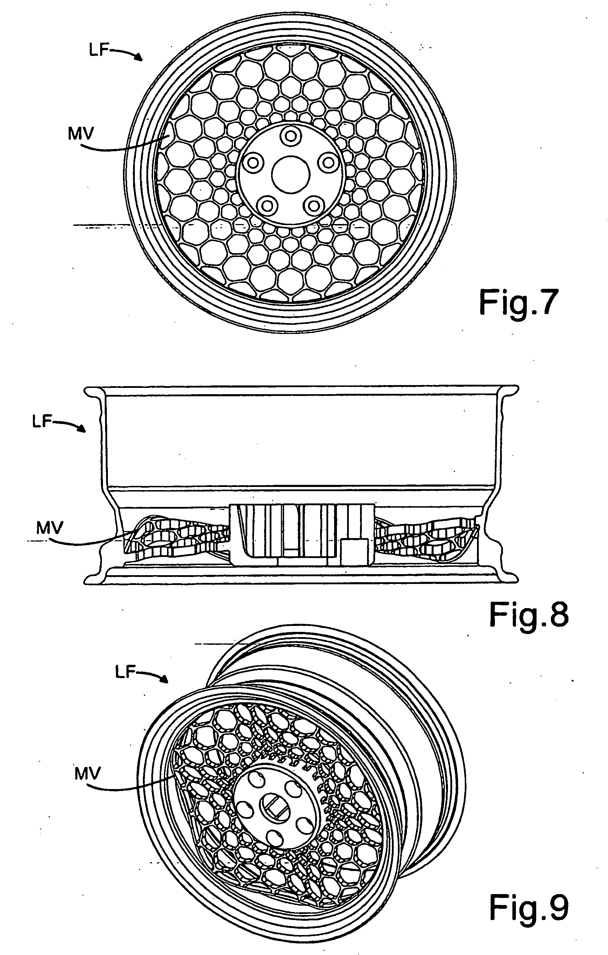

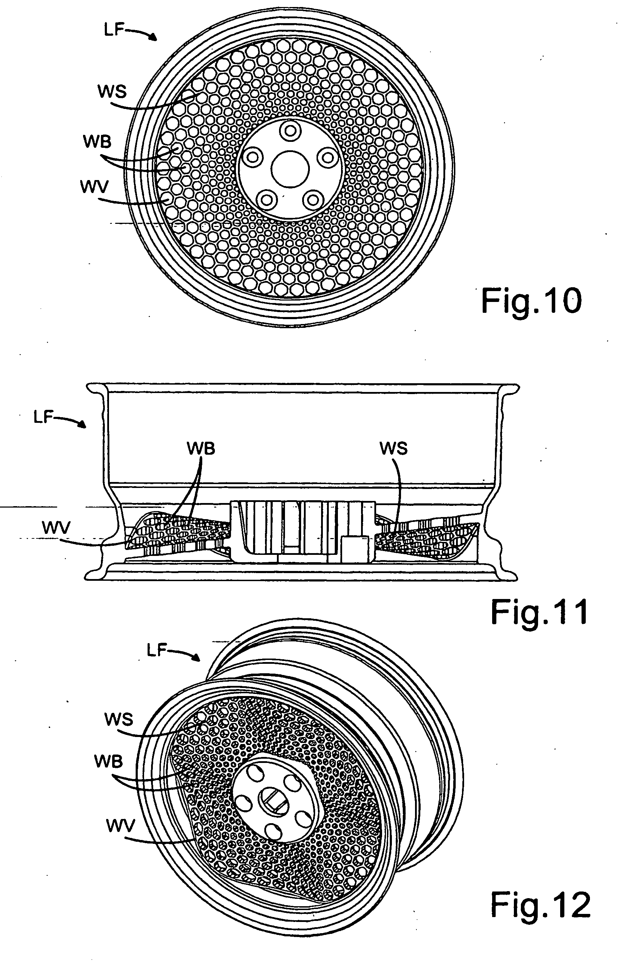

Der mäanderförmige Verlauf **MV** der Wabenstruktur in den **Figuren 8 und 9** zeigt hingegen einen wellenförmigen Verlauf **WV.** In der Frontansicht gemäß **Figur 7** ist dieser Unterschied zu Figur 1 nicht zu erkennen, jedoch ist zu erkennen, dass die einzelnen Waben **WB** relativ groß sind. Damit entspricht diese Ausführungsform der Ausführungsform gemäß Figuren 1 bis 3, allerdings hier mit einem wellenförmigen Verlauf **WV.** Gleiches gilt für die Wabenstruktur **WS** gemäß der **Figuren 10, 11** und **12****.** Hier wird die Wabenstruktur **WS** gemäß Figuren 4 bis 6 mit kleinen Waben **WB** gezeigt, allerdings nunmehr ebenfalls mit einem wellenförmigen Verlauf **WV.**

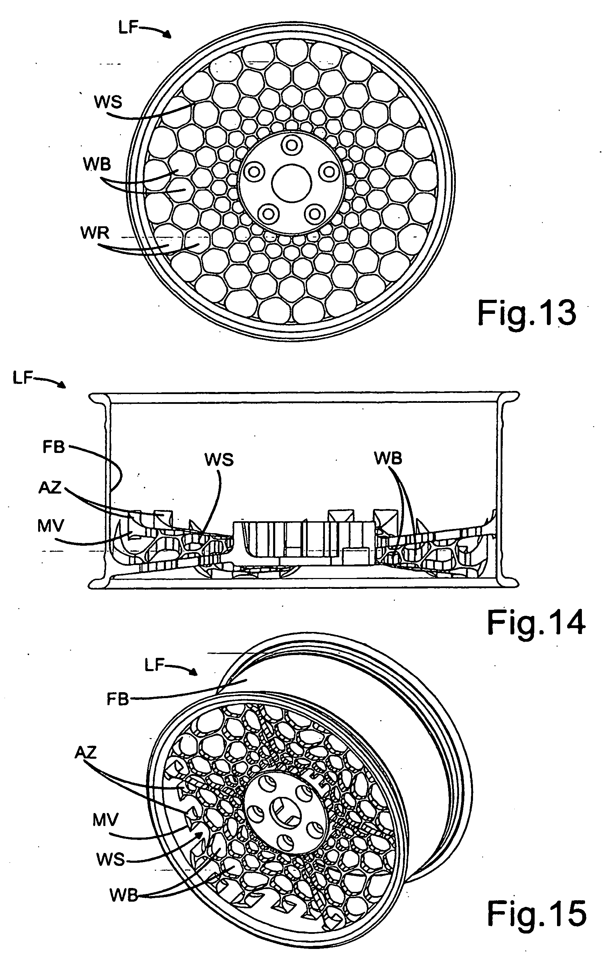

In der **Figur 13** ist eine Wabenstruktur **WS** mit besonders großen, nahezu vollständigen Waben **WB** im äußeren Wabenring **WB** dargestellt. Es ergeben sich wiederum fünf konzentrische Wabenringe **WR.** In den **Figuren 14 und 15** ist ein mäanderförmiger Verlauf **MV** der Wabenstruktur **WS** mit fünf Perioden dargestellt. Aufgrund der Größe der äußeren Waben **WB** ergeben sich deutliche sichtbare Abstützungen **AZ** an der Innenseite des Felgenbetts **FB.** Es ist nicht mehr klar zu erkennen, ob der mäanderförmige Verlauf **MV** wellen- oder stufenförmig ist. Vielmehr zeigen sich die einzelnen Abstützungen **AZ,** die der Leichtbaufelge **LF** wiederum ein anderes, aber sehr charakteristisches optisches Erscheinungsbild bei optimaler Funktionalität verleihen.

### Bezugszeichenliste

- **AZ**: Abstützung
- **BO**: Bohrung
- **FB**: Felgenbett
- **FK**: Felgenkörper
- **LF**: Leichtbaufelge
- **MV**: mäanderförmiger Verlauf
- **NB**: zentrale Nabe
- **OB**: oberes Plateau
- **WA**: Wabenabschnitt
- **WB**: Wabe
- **WI**: Wabeninneres
- **WR**: Wabenring
- **WS**: Wabenstruktur
- **WV**: wellenförmiger Verlauf
- **WW**: Wabenwand
- **RE**: Radialebene
- **SV**: stufenförmiger Verlauf
- **UF**: unteres Plateau
- **ZB**: zentrale Bohrung

## Patentansprüche

1. Leichtbaufelge für ein Kraftfahrzeug mit einem tragenden Felgenkörper in der Radialebene der Leichtbaufelge aus kraftübertragenden, netzartig miteinander verbundenen Rippen mit einem hohen Aspektverhältnis von Breite zu Höhe, der eine zentrale Nabe zur Befestigung an einer Kraftfahrzeugachse aufweist, und mit einem mit dem Felgenkörper verbundenen äußeren Felgenbett,
**gekennzeichnet durch**
einen Aufbau der kraftübertragenden, netzartig miteinander verbundenen Rippen des Felgenkörpers (FK) in Form einer Wabenstruktur (WS) aus mehreren konzentrischen Wabenringen (WR) mit einer Vielzahl von einzelnen, bodenlosen Waben (WB), die zwischen den Wabenringen (WR) versetzt zueinander angeordnet sind und in Richtung auf die Nabe (NB) hin kleiner werden und **gekennzeichnet durch** einen mäanderförmigen Verlauf (MV) der Wabenstruktur (WS) entlang der Radialebene (RE).

2. Leichtbaufelge nach Anspruch 1,
**gekennzeichnet durch** eine Abrundung des Inneren (WI) jeder Wabe (WB).

3. Leichtbaufelge nach Anspruch 1 oder 2,
**gekennzeichnet durch** einen dem Felgenbett (FB) benachbarten, äußeren Wabenring (WR) aus Wabenabschnitten (WA).

4. Leichtbaufelge nach einem der Ansprüche 1 bis 3,
**gekennzeichnet durch** einen wellenförmigen Verlauf (WV) der Wabenstruktur (WS) entlang der Radialebene (RE).

5. Leichtbaufelge nach einem der Ansprüche 1 bis 3,
**gekennzeichnet durch** einen stufenförmigen Verlauf (SV) der Wabenstruktur (WS) entlang der Radialebene (RE) mit einer Bildung von oberen Plateaus (OP) und unteren Plateaus (UP) am Felgenbett (FB).

6. Leichtbaufelge nach einem der Ansprüche 1 bis 5,
**gekennzeichnet durch** einen Aufbau aus einem Kunststoffmaterial.

7. Leichtbaufelge nach Anspruch 6,
**gekennzeichnet durch** einen Aufbau aus einem faserverstärkten Kunststoff mit anisotropen Materialeigenschaften.

## Claims

1. A lightweight rim for a vehicle with a supporting rim body in the radial plane of the lightweight rim, which rim body is made from force-transmitting ribs which are reticularly connected to one another and have a high aspect ratio of width to height and has a central hub for fixing to a vehicle axle, and with an outer rim well connected to the rim body,
**characterized by**
a construction of the force-transmitting ribs of the rim body (FK), which are reticularly connected to one another, in the shape of a honeycomb structure (WS) made from a plurality of concentric honeycomb rings (WR) with a multiplicity of individual open honeycombs (WB) which are arranged between the honeycomb rings (WR) offset with respect to one another and become smaller in the direction of the hub (NB), and **characterized by** a meandering progression (MV) of the honeycomb structure (WS) along the radial plane (RE).

2. The lightweight rim according to Claim 1,
**characterized by**
a rounding of the interior (WI) of each honeycomb (WB).

3. The lightweight rim according to Claim 1 or 2,
**characterized by**
an outer honeycomb ring (WR) adjacent to the rim well (FB) and made from honeycomb sections (WA).

4. The lightweight rim according to one of Claims 1 to 3,
**characterized by**
a wave-like progression (WV) of the honeycomb structure (WS) along the radial plane (RE).

5. The lightweight rim according to one of Claims 1 to 3,
**characterized by**
a stepped progression (SV) of the honeycomb structure (WS) along the radial plane (RE) with formation of upper plateaus (OP) and lower plateaus (UP) at the rim well (FB).

6. The lightweight rim according to one of Claims 1 to 5,
**characterized by**
a construction made from a plastic material.

7. The lightweight rim according to Claim 6,
**characterized by**
a construction made from a fibre-reinforced plastic with anisotropic material properties.

## Revendications

1. Jante en alliage léger pour un véhicule automobile comprenant un corps de jante porteur dans le plan radial de la jante en alliage léger à base de nervures transmettant la force, reliées les unes aux autres à la façon d'un réseau avec un rapport d'aspect largeur/hauteur élevé, qui présente un moyeu central pour la fixation sur un essieu de véhicule automobile, et une embase de jante extérieure reliée au corps de jante,
**caractérisée par**
une structure des nervures, transmettant la force et reliées les unes aux autres à la façon d'un réseau, du corps de jante (FK) sous la forme d'une structure en nid d'abeilles (WS) à base de plusieurs bagues en nid d'abeilles (WR) concentriques avec une pluralité d'alvéoles (WB) individuelles et sans fond, qui sont disposées entre les bagues en nid d'abeille (WR) décalées les unes par rapport aux autres et deviennent plus petites en direction du moyeu (NB) et **caractérisée par** un tracé (MV) en forme de méandre de la structure en nid d'abeilles (WS) le long du plan radial (RE).

2. Jante en alliage léger selon la revendication 1,
**caractérisée par** un arrondi de l'intérieur (WI) de chaque alvéole (WB).

3. Jante en alliage léger selon la revendication 1 ou 2,
**caractérisée par** une bague en nid d'abeilles (WR) extérieure et voisine de l'embase de jante (FB), à base de parties en nid d'abeilles (WA).

4. Jante en alliage léger selon l'une quelconque des revendications 1 à 3,
**caractérisée par** un tracé (WV) de forme ondulée de la structure en nid d'abeilles (WS) le long du plan radial (RE).

5. Jante en alliage léger selon l'une quelconque des revendications 1 à 3,
**caractérisée par** un tracé (SV) en dégradé de la structure en nid d'abeilles (WS) le long du plan radial (RE) avec une formation de plateaux supérieurs (OP) et de plateaux inférieurs (UP) sur l'embase de jante (FB).

6. Jante en alliage léger selon l'une quelconque des revendications 1 à 5,
**caractérisée par** une structure à base d'un matériau plastique.

7. Jante en alliage léger selon la revendication 6,
**caractérisée par** une structure à base d'un plastique renforcé de fibre avec des propriétés de matériau anisotropes.
